# EUROPÄISCHE PATENTSCHRIFT

(11) **EP 1 080 450 B1**
(45) Veröffentlichungstag und Bekanntmachung des Hinweises auf die Patenterteilung: **21.08.2002**
(21) Anmeldenummer: 99934510.1
(22) Anmeldetag: 26.05.1999
(51) Int. Cl.: G06T 5/50

(54) **VERFAHREN ZUR RAUSCH- UND ARTEFAKTREDUKTION BEI DIGITALEN SUBTRAKTIONSBILDVERFAHREN**
METHOD FOR NOISE AND ARTEFACTS REDUCTION THROUGH DIGITAL IMAGE SUBTRACTION
PROCEDE DE REDUCTION DU BRUIT ET DES ARTEFACTS DANS DES PROCEDES D'IMAGERIE NUMERIQUE AVEC SOUSTRACTION

(30) Priorität: 27.05.1998 DE 19823597
(43) Veröffentlichungstag der Anmeldung: 07.03.2001
(73) Patentinhaber: Deutsches Krebsforschungszentrum Stiftung des öffentlichen Rechts, 69120 Heidelberg (DE)
(72) Erfinder: KRESS, Jürgen, D-69221 Dossenheim (DE); BAHNER, Malte, D-69117 Heidelberg (DE); DEBUS, Jürgen, D-76618 Stettfeld (DE)
(74) Vertreter: Castell, Klaus, Dr.-Ing.
(86) Internationale Anmeldenummer: DE9901545
(87) Internationale Veröffentlichungsnummer: WO99062031

(56) Entgegenhaltungen:
- US-A- 5 647 360
- CARRATO S ET AL: "A GRADIENT-DIRECTED UNSHARP MASKING ALGORITHM FOR SYNCHROTRON RADIATION ANGIOGRAPHY" INTEGRATING RESEARCH, INDUSTRY AND EDUCATION IN ENERGY AND COMMUNICATION ENGINEERING, LISBON, APR. 11 - 13, 1989, 11. April 1989 (1989-04-11), Seiten 269-272, XP000078346 BARBOSA A M

## Beschreibung

Die Erfindung betrifft ein Verfahren zur Rausch- und Artefaktreduktion bei digitalen Subtraktionsbildverfahren, insbesondere bei digitalen Subtraktionsangiographieverfahren, bei welchen ein Subtraktionsbilddatensatz aus zwei Volumendatensätzen erzeugt wird, wobei jeder Volumendatensatz aus einer Vielzahl von Elementen (Voxeln) besteht und jedem Voxel ein ein- oder mehrdimensionaler Vektor (Grauwert) zugeordnet ist.

Solche Verfahren sind bekannt, zum Beispiel aus dem Aufsatz vom K.-H. Englmeier et al.: "Ein Verfahren zur computergestützten, dreidimensionalen Subtraktionsangiographie mit Hilfe der Spiralröntgencomputertomographie" in: Radiologe (1996), 36: 360-364 oder dem Aufsatz von W. Lumboldt et al.: "CT-Subtraktionsangiographie - Ergebnisse mit einem automatisierten "elastischen" Subtraktionsalghorythmus", in: Radiologe (1997), 37: 89-93. Sie dienen dazu, bei Subtraktionsbildverfahren, bei denen zwei Volumendatensätze voneinander "substrahiert" werden, Rauschen und Artefakte weitestmöglichst zu reduzieren. Die Ausgangsvolumendatensätze stammen dabei von einer elektromechanischen oder elektronischen Abtasteinrichtung, einem bildgebenden medizinischen Gerät, zum Beispiel einem Ultraschall- oder Röntgengerät, einem Computer-, Magnetresonanzoder Positronenemissionstomographen oder wurden sonstwie erzeugt, zum Beispiel aus gemessenen Daten berechnet. Beide Volumendatensätze enthalten Informationen über ein- und dasselbe Aufnahmegebiet, unterscheiden sich jedoch zum Beispiel hinsichtlich bestimmter Aufnahmeparameter, zum Beispiel der Leistung, mit der ein Röntgengerät bei der Aufnahme der beiden Volumendatensätze betrieben wurde. Sie können sich aber auch dadurch unterscheiden, daß physikalische und/oder chemische Eigenschaften des sich in dem Aufnahmegebiet befindenden, zu untersuchenden Körpers verändert wurden, wie zum Beispiel bei der Subtraktionsangiographie, bei der mit derselben Röntgenleistung zwei Volumendatensätze ein und desselben Körperteils, insbesondere des menschlichen Kopfes, erzeugt werden, wobei die Aufnahme jedoch einmal mit und einmal ohne vorherige Verabreichung eines Kontrastmittels gemacht wird.

Schließlich können die beiden Volumendatensätze auch von gänzlich unterschiedlichen Aufnahmeeinrichtungen stammen, zum Beispiel vom einem Computertomographen, der einen guten Knochen-Weichteil-Kontrast liefert, und einem Magnetresonanztomographen, der einen guten Weichteil-Weichteil-Kontrast liefert. Durch die Subtraktion der beiden Volumendatensätze erhofft man sich eine Verbesserung der in den Volumendatensätzen enthaltenen Informationen. So können zum Beispiel bei der Subtraktionsangiographie, bei der es um die Sichtbarmachung von Gefäßen geht, die hier nur störenden Informationen über vorhandene Knochen weitestgehend eliminiert werden.

Bei den Ausgangs-Volumendatensätzen kann es sich um in einem Aufnahmeschritt aufgenommene Volumendatensätze handeln, wie sie zum Beispiel von bestimmten medizinischen bildgebenden Geräten, zum Beispiel 3D-Ultraschallwandlern erzeugt werden, oder um aus einer Anzahl von zweidimensionalen Schnittbildern, wie sie zum Beispiel von den meisten Computertomographen oder üblichen 2D-Ultraschallwandlern geliefert werden, zusammengesetzte Volumendatensätze handeln.

Die beiden Ausgangsvolumendatensätze besitzen in der Regel, insbesondere natürlich immer dann, wenn sie von ein und demselben Aufnahmegerät stammen, die gleichen Dimensionen, bestehen also zum Beispiel aus 136 x 256 x 256 Voxeln. Da dabei regelmäßig das Problem auftritt, dass sich die Aufnahmeposition des aufgenommenen Objektes zwischen des Aufnahmen leicht ändert, müssen die beiden Ausgangsvolumendatensätze zunächst räumlich transformiert werden, wie z.B. in der US 5,647,360 beschrieben.

Es können aber auch Volumendatensätze zueinander in Beziehung gesetzt und voneinander subtrahiert werden, die nicht aus derselben Anzahl von Voxeln bestehen, was in der Regel dann auftritt, wenn die Volumendatensätze nicht von einem einzigen Aufnahmegerät aufgenommen wurden. Dabei wird der Aufnahmeraum in an sich bekannter Weise in kleine Raumeinheiten unterteilt und die in eine bestimmte Raumeinheit fallenden Voxel des einen Volumendatensatzes werden nach entsprechender Interpolation von den in dieselbe Raumeinheit fallenden Voxeln des anderen Volumendatensatzes "subtrahiert", wobei natürlich nicht Voxel, die ja nur den Ort beschreiben, an dem eine bestimmte Information aufgenommen wurde, sondern die jedem Voxel in Form eines ein- oder mehrdimensionalen Vektors zugeordneten Werte voneinander subtrahiert werden.

Den einzelnen Voxeln des Volumendatensatzes sind also Vektoren. zugeordnet, die im einfachsten Fall, wenn es sich um Grauwertbilder handelt, eindimensional (skalar) sind und deren Komponenten in der Regel nur aus einer ganzen Zahl aus einem vorbestimmten Wertebereich, zum Beispiel [0,255], mit einer vorbestimmten Anzahl, zum Beispiel 256 möglicher Zahlenwerte besteht, die dann möglichen Graustufen des jeweiligen Volumendatensatzes entsprechen, wobei zum Beispiel der niedrigste Wert für ein weißes, der höchste Wert für ein schwarzes Voxel steht, wobei aber auch beliebige andere Zuordnungen möglich sind.

Den Voxeln können anstelle eindimensionaler auch, wie zum Beispiel bei Farbbildern, dreidimenionale Vektoren zugeordnet sein, deren Komponenten den möglichen Intensitätsniveaus dreier Grundfarben, zum Beispiel den Farben rot, grün, blau oder zyan, magenta und gelb entsprechen.

Schließlich können den Voxeln auch Vektoren mit mehr als drei Dimensionen zugeordnet sein, zum Beispiel 20-dimensionale wie bei einigen Radarbeobachtungssatelliten, deren 20 verschiedenen Komponenten dann zum Beispiel den möglichen Intensitätsniveaus verschiedener Meßgrößen entsprechen.

Die in den Volumendatensätzen und insbesondere dem daraus erzeugten Subtraktionsbilddatensatz enthaltenen Informationen können in an sich bekannter Weise angezeigt werden, zum Beispiel in Form einer plastischen Pseudo-3D-Darstellung auf einem Bildschirm oder einem Drucker ausgegeben werden, wozu die unterschiedlichsten Verfahren, zum Beispiel sogenannte Raytracing-Verfahren oder die sogenannte maximale Intensitätsprojektion verwendet werden.

Nun sind nicht nur die Ausgangs-Volumendatensätze mit Rauschen und je nach Aufnahmeverfahren - auch mit Artefakten behaftet, auch beim "Subtrahieren" treten aus unterschiedlichsten Gründen neues Rauschen und neue Artefakte auf. Insbesondere bei der Subtraktionsangiographie beruht ein Teil der auftretenden Artefakte auf translatorischen Verschiebungen des untersuchten Körpers zwischen der Aufnahme der beiden Volumendatensätze. Das in dem genannten Aufsatz von Englmeier beschriebene Verfahren ermittelt solche Translationen unter Verwendung der sogenannten "Cepstrumfiltermethode". Es kann zwar einen Teil der auftretenden Artefakte beseitigen, ist jedoch aufgrund der bei diesem Verfahren durchzuführenden Interpolationen zum einem rechenzeitaufwendig und zum anderen mit einem Informationsverlust verbunden. Zudem erscheint fraglich, ob das Verfahren Artefakte, die aufgrund einer fehlenden Synchronität von Röntgenröhre und Röntgentisch auftreten, überhaupt beseitigen kann. Das in dem genannten Aufsatz von Lumboldt beschriebene Verfahren kann dem gegenüber sowohl Translationen als auch Verzerrungen korrigieren, wozu in den Volumendatensätzen kongruente Voluminaflächen, Kanten und Punkte elastisch zur Deckung gebracht werden. Dieses sogenannte "elastische Matchen" ist jedoch ebenfalls sehr rechenzeitaufwendig, und ist nicht nur mit einem Informationsverlust aufgrund der auch bei diesem Verfahren auszuführenden Interpolationen, sondern auch mit einem Verlust der gerade bei der Subtraktionsangiographie sehr hohen geometrischen Exaktheit verbunden.

Davon ausgehend liegt der Erfindung die Aufgabe zugrunde, ein Verfahren zur Rausch- und Artefaktreduktion bei Subtraktionsbildverfahren anzugeben, das zum einen Rauschen und Artefakte weitestgehend ohne Informationsverlust reduziert und das zum anderen eine möglichst geringe Komplexität aufweist, so daß das Verfahren sehr schnell arbeitet.

Die Aufgabe wird gelöst von einem Verfahren der eingangs genannten Art, bei welchem ein erster m-dimensionaler Grenzvektor, wobei m der Anzahl der Dimensionen der Vektoren des Subtraktionsbilddatensatzes entspricht, und eine erste Nachbarschaftsbeziehung zwischen den Voxeln des Subtraktionsbilddatensatzes definiert werden, wenigstens die n-te (wobei n Element der positiv natürlichen Zahlen ist) Komponente der jeweils m-Komponenten aller Vektoren des Subtraktionsbilddatensatzes mit der n-ten Komponente des ersten Grenzvektors verglichen und bei Erfüllung einer vorbestimmten ersten Auswahlbedingung auf einen vorbestimmten ersten Einheitswert gesetzt wird und wobei jede nicht die erste Auswahlbedingung erfüllende n-te Komponete eines einem Voxel zugeordneten Vektors mit den n-ten Komponenten der dem Voxel gemäß der ersten Nachbarschaftsbeziehung benachbart liegenden Voxeln zugeordneten Vektoren und bei Erfüllung einer vorbestimmten zweiten Auswahlbedingung ebenfalls auf den vorbestimmten ersten Einheitswert gesetzt wird. Dabei enthält die erste Auswahlbedingung vorzugsweise eine Abfrage, ob der Wert der jeweils mit der entsprechenden Komponente des ersten oder zweiten Grenzvektors verglichenen Komponente des jeweiligen Vektors über- oder unterhalb des Wertes der entsprechenden Komponente des jeweiligen Grenzvektors liegt.

Die zweite Auswahlbedingung kann vorteilhaft eine Ähnlichkeitsabfrage enthalten, ob einem oder mehreren der gemäß der ersten Nachbarschaftsbeziehung dem jeweils betrachteten Voxel benachbart liegenden Voxeln Vektoren zugeordnet sind, deren Komponenten der jeweils betrachteten Komponente des dem betrachteten Voxel zugeordneten Vektors ähnlich sind.

Die Erfindung beruht also auf dem Grundgedanken, daß nach der Subtraktion die verbliebenen Artefakte zufällig verteilt sind und keine größeren zusammenhängenden Strukturen bilden. Stammen beide Datensätze von ein und demselben Aufnahmegerät, ist diese Annahme jedenfalls immer dann gerechtfertigt, wenn sich das Objekt zwischen den Aufnahmen der beiden Datensätze gar nicht oder nur sehr wenig bewegt hat. Insbesondere bei medizinischen Bilddatensätzen wird also in der Regel auf eine ausreichende Immobilisierung in an sich bekannter Weise zu achten sein. Trifft die genannte Annahme zu, können alle keine zusammenhängenden Strukturen bildenden Voxel oder Ansammlungen von Voxeln (Cluster) auf einen vorbestimmten ersten Einheitswert, zum Beispiel Null gesetzt werden und erscheinen bei einer anschließenden Darstellung des Subtraktionsbilddatensatzes zum Beispiel mittels der erwähnten maximalen Intensitätsprojektion nicht und sind gewissermaßen "durchsichtig". Es sei an dieser Stelle betont, daß wenn hier davon gesprochen wird, daß "ein Voxel auf einen bestimmten Einheitswert" gesetzt wird, damit natürlich gemeint ist, daß die jeweils betrachtete Komponente des dem Voxel zugeordnetem Vektors auf diesen Einheitswert gesetzt wird. Bei reinen Grauwertbildern sind die den Voxeln zugeordneten Vektoren natürlich eindimensional und jedem Voxel ist nur ein einziger, skalarer Wert zugeordnet. Aus historischen Gründen werden allerdings auch mehrdimensionale Vektoren oftmals als "Grauwert" der Voxel bezeichnet, wobei das erfindungsgemäße Verfahren bei Volumendatensätzen aus Voxeln, denen mehrdimensionale Vektoren zugeordnet sind, dann zum einen so durchgeführt werden kann, daß jeweils nur eine bestimmte Komponente der Vektoren, die zum Beispiel dem Meßwert für das Absorptionsverhalten in dem Voxel für Strahlung einer bestimmten Intensität entspricht, betrachtet wird. Das erfindungsgemäße Verfahren kann aber auch so durchgeführt werden, daß nacheinander oder abwechselnd mehrere oder alle Komponenten der Vektoren daraufhin untersucht werden, ob sie Rauschen und/oder Artefakte repräsentieren, um dann auf den bzw. die vorbestimmten Einheitswerte (in der Regel Null) gesetzt zu werden.

Eine besonders einfache Durchführungsform des erfindungsgemäßen Verfahrens läßt sich vorteilhaft dann realisieren, wenn die Voxel der beiden Volumendatensätze und der Schnittbildsätze jeweils einem Pixel eines aus einer Vielzahl von Pixeln bestehenden Schnittbildes einer den Volumen- und den Bilddatensatz bildenden Anzahl von Schnittbildern entsprechen, was zum Beispiel bei den meisten bildgebenden Verfahren in der Medizin, insbesondere der Subtraktionsangiographie der Fall ist. Dann kann nämlich die erste Nachbarschaftsbeziehung derart definiert werden, daß zu jedem Pixel einer Schicht nur ein Pixel aus anderen, an die Schicht des jeweiligen Pixels angrenzenden Schichten, nicht aber Pixel aus derselben Schicht als benachbart angesehen werden. Die Erzeugung des Subtraktionsbilddatensatzes wird nämlich bei solchen aus einer Anzahl von Schnittbildern bestehenden Volumendatensätzen der einfachheithalber so vorgenommen, daß jeweils einander räumlich entsprechende Schichten aus beiden Volumendatensätzen voneinander subtrahiert werden, so daß Subtraktionsartefakte in jeder Schicht gesondert entstehen und in der Regel keine sich über mehrere Schichten hinwegziehenden zusammenhängenden Cluster bilden. Man kann daher diesen Schritt des erfindungsgemäßen Verfahrens als "Kontinuitätscheck" bezeichnen, bei dem also geprüft wird, ob ein aufgrund seiner zum Beispiel oberhalb bestimmter, in dem ersten Grenzvektor festgelegter Grenzwerte liegenden "Grauwerte" als Artefaktvoxel in Betracht kommendes Voxel Entsprechungen in seiner Nachbarschaft bzw. benachbarten Schichten hat. Hat es diese Entsprechungen -hat also der Grauwert über mehrere Voxel hinweg eine gewisse Kontinuität - so wird davon ausgegangen, daß es sich nicht um einen zufällig entstandenen Artefakt, sondern um tatsächlich interessierende Informationen handelt und die Komponenten der den entsprechenden Voxeln zugeordneten Vektoren bleiben unverändert.

In vorteilhafter Weiterbildung der Erfindung kann wenigstens ein zweiter m-dimensionaler Grenzvektor definiert werden und vor der Erzeugung des Subtraktionsbilddatensatzes kann wenigstens eine Komponente der Vektoren wenigstens eines der beiden Volumendatensätze mit der entsprechenden Komponente des Grenzvektors verglichen und bei Erfüllung einer dritten Auswahlbedingung auf einen vorbestimmten, nicht notwenigerweise mit dem ersten Einheitswert identischen zweiten Einheitswert gesetzt werden. Dies entspricht dem, was man in der Bildverarbeitung allgemein als "Glättung" bezeichnet und dient dazu, bestimmte, unter oder oberhalb eines gewissen Schwellenwertes liegende "Grauwerte" zu unterdrücken, so daß bei der anschließenden Subtraktion der beiden Volumendatensätze tatsächlich nur diejenigen Voxel voneinander "subtrahiert" werden, die überhaupt dafür in Frage kommen, relevante Informationen zu enthalten.

Bei einer bevorzugten Ausführungsform der Erfindung ist vorgesehen, daß bei der Erzeugung des Subtraktionsbilddatensatzes nur diejenigen Voxel der Volumendatensätze berücksichtigt werden, deren zugeordnete Vektoren Komponenten besitzen, die in vordefinierte erste, nicht notwendigerweise für beide Volumendatensätze identische m-dimensionale Wertebereiche fallen. In der Regel ist es dabei vorteilhaft vorzusehen, daß die Wertebereiche für jeden der Volumendatensätze verschieden sind. Man kann diesen Verfahrensschritt als "parametrisierte Subtraktion" bezeichnen und sie dient ähnlich wie die zuvor beschriebene Glättung dazu, nur diejenigen Voxel bei der Erzeugung des Subtraktionsbilddatensatzes zu berücksichtigen, die tatsächlich relevante Informationen enthalten, was nicht nur die Bildqualität erheblich verbessert, sondern was auch die Komplexität der auszuführenden Subtraktionen und - je nach Umsetzung - auch die Anzahl der auszuführenden Subtraktionen erheblich verringert und es damit ermöglicht, das erfindungsgemäße Verfahren besonders schnell auszuführen.

Je nach Art des Subtraktionsbildverfahrens, bei dem das erfindungsgemäße Verfahren angewandt werden soll, kann es vorkommen, daß bei der zuvor beschriebenen "parametrisierten Subtraktion" noch Voxel berücksichtigt wurden und zu entsprechenden Artefakten führen, die an sich nicht weiter interessieren. Diese Voxel können in einem sogenannten "Ausdünnungsschritt" nach der Erzeugung des Subtraktionsbilddatensatzes und vor dem Vergleich der Vektoren des Subtraktionsbilddatensatzes mit dem ersten Grenzvektor dadurch ausgesondert werden, daß eine nicht notwendigerweise mit der ersten Nachbarschaftsbeziehung identische zweite Nachbarschaftsbeziehung definiert wird und daß die Voxel des Subtraktionsbilddatensatzes, denen Vektoren mit Komponenten innerhalb eines vorbestimmten zweiten m-dimensionalen Wertebereichs zugeordnet sind, ausgewählt werden und daß wenigstens eine Komponente des Vektors jedes ausgewählten Voxels dann auf einen vorbestimmten dritten Einheitswert (in der Regel Null) gesetzt wird, wenn bei der Erzeugung dieser ausgewählten Voxeln berücksichtigten Voxeln eines der beiden Volumendatensätze gemäß der zweiten Nachbarschaftsbeziehung Voxel benachbart liegen, die bei der Erzeugung des Subtraktionsbilddatensatzes aufgrund entweder des Über- oder des Unterschreitens des zugeordneten Wertebereichs nicht berücksichtigt wurden. Dieser vorteilhafte "Ausdünnungsschritt" des erfindungsgemäßen Verfahrens wird - ebenso wie der "Kontinuitätscheck" und die "parametrisierte Subtraktion" - nachfolgend am Beispiel der Anwendung des erfindungsgemäßen Verfahrens bei der Subtraktionsangiographie unter Bezugnahme auf die beigefügten Figuren näher erläutert. Es zeigen,
- Figuren 1 und 2: zwei von einem Computertomographen jeweils an der selben Stelle aufgenommene Schnittbilder eines menschlichen Schädels, jedoch einmal ohne (Figur 2) und einmal mit (Figur 1) vorheriger Verabreichung eines Kontrastmittels,
- Figur 3: das Ergebnisbild einer reinen "voxelweisen" Subtraktion des in Figur 2 gezeigten Schnittbildes von dem in Figur 1 gezeigten Schnittbild,
- Figur 4: das Ergebnis einer nach dem erfindungsgemäßen Verfahren ausgeführten "parametrisierten Subtraktion" der Schnittbilder gemäß Figur 1 und Figur 2 voneinander,
- Figur 5: eine plastisch wirkende maximale Intensitätsprojektion eines kompletten, mittels der parametrisierten Subtraktion erzeugten Subtraktionsbilddatensatzes,
- Figur 6: das Schnittbild gemäß Figur 4, jedoch nach dem Ausführen des Ausdünnungsschritts und des Kontinuitätschecks und
- Figur 7: eine maximale Intensitätsprojektion des kompletten, aus einer Anzahl von Schnittbildern wie den Figur 6 gezeigten bestehenden Subtraktionsbilddatensatzes.

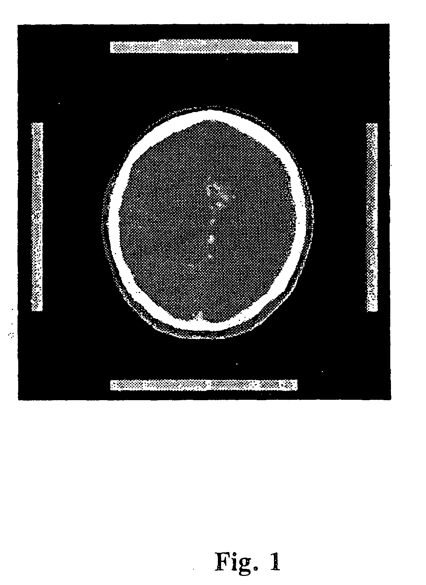

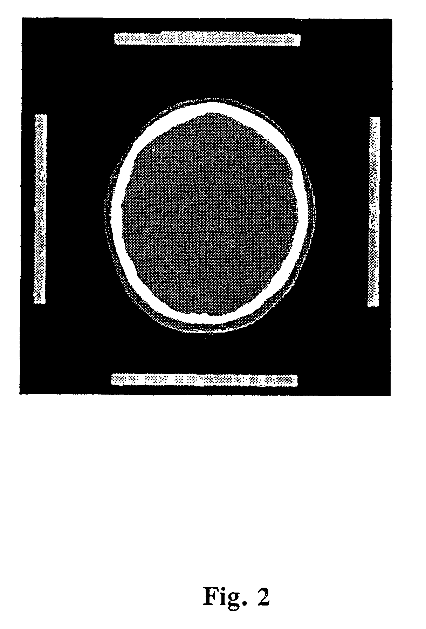

In den Figuren 1 und 2 sind zwei von einem Computertomographen jeweils am selben Ort aufgenommene Schnittbilder eines menschlichen Schädels gezeigt, wobei jedoch vor der Aufnahme des in Figur 1 gezeigten Schnittbildes dem untersuchten Patienten ein Kontrastmittel verabreicht wurde, so daß die durchbluteten Gefäße in Figur 1 heller erscheinen als in Figur 2. Im Abstand weniger Millimeter aufgenommene Schnittbilder der in Figuren 1 und 2 gezeigten Art bilden die Ausgangs-Volumendatensätze, aus denen nun Subtraktionsbilddatensätze erzeugt werden sollen. Dabei besteht ein solcher Volumendatensatz zum Beispiel aus 136 Schnittbildern, die jeweils aus zum Beispiel 256 x 256 Pixeln bestehen. Jedem Pixel (wenn man ein einziges Schnittbild betrachtet) bzw. jedem Voxel (wenn man den gesamten Volumendatensatz betrachtet) ist ein im Falle der Computertomographie eindimensionaler Vektor zugeordnet, dessen einzige Komponente nur ganzzahlige Werte aus einem vorbestimmten Wertebereich, zum Beispiel [0,255] annehmen kann, wobei der angenommene Wert dem Absorptionsverhalten für Röntgenstrahlung einer bestimmten Wellenlänge, nämlich der Wellenlänge des verwendeten Computertomographen entspricht.

Bei allen hier gezeigten Figuren ist dabei die Umsetzung der gemessenen Absorptionswerte in bildlich darstellbare Grauwerte so gewählt, daß Bildelemente, in denen eine stärkere Absorption der Strahlung gemessen wurde, heller erscheinen als Bildelemente, die die Strahlung nur wenig oder gar nicht absorbieren. Die Schädeldecke des Patienten erscheint daher in den Schnittbildern der Figuren 1 und 2 als dicke, ringförmige, weiße Linie.

Da bei Computertomographen der Weichteil-Weichteil-Kontrast bekannterweise schlecht ist, wird bei der Subtraktionsangiographie ein Kontrastmittel verabreicht, so daß die Gefäße bei der Aufnahme mit Kontrastmittel heller erscheinen (Figur 1) als bei der Aufnahme derselben Gefäße ohne Kontrastmittel (Figur 2). Da die Helligkeit der hier nicht interessierenden Knochen bei beiden Aufnahmen an sich identisch sein müßte, da sie nicht durch das Kontrastmittel beeinflußt wird, sollten die Knochen und weiteren nicht interessierenden Gebiete bei der Subtraktion des an der selben Stelle aufgenommenen Schnittbildes gemäß Figur 2 von dem Schnittbild gemäß Figur 1 wegfallen und es sollten in dem Differenzbild nur die durchbluteten und damit durch das Kontrastmittel hervorgehobenen Gefäße zurückbleiben.

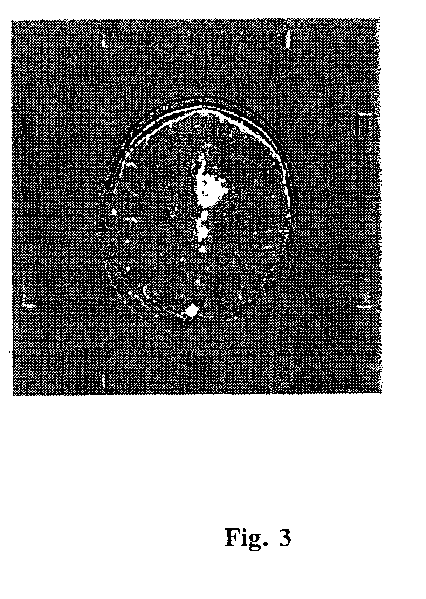

Wie Figur 3 zeigt, ist dies nicht der Fall und man erkennt neben dem Rauschen noch die typischen Knochenartefakte. Diese stammen nicht von einer Translation, da sich sonst sowohl an der frontalen als auch an der okzipitalen Kalottenseite die typischen hellen und dunklen Streifen zeigten.

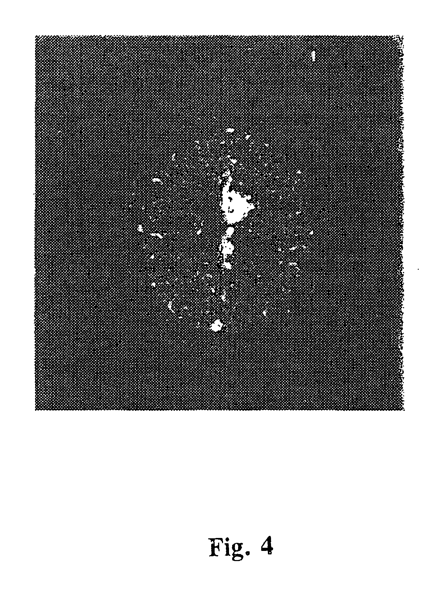

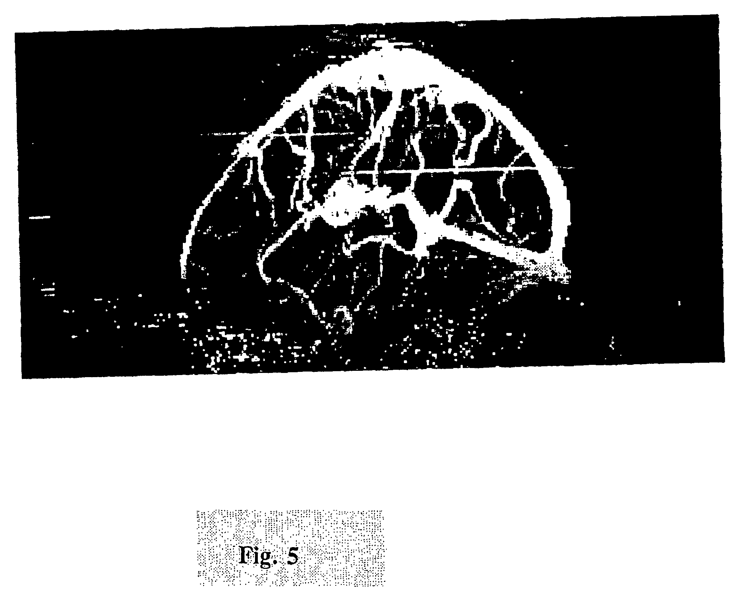

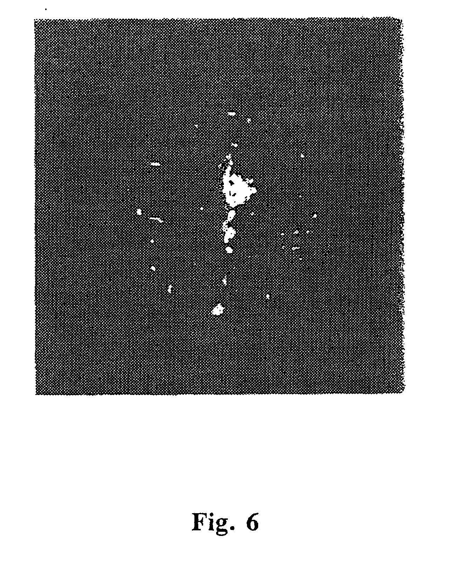

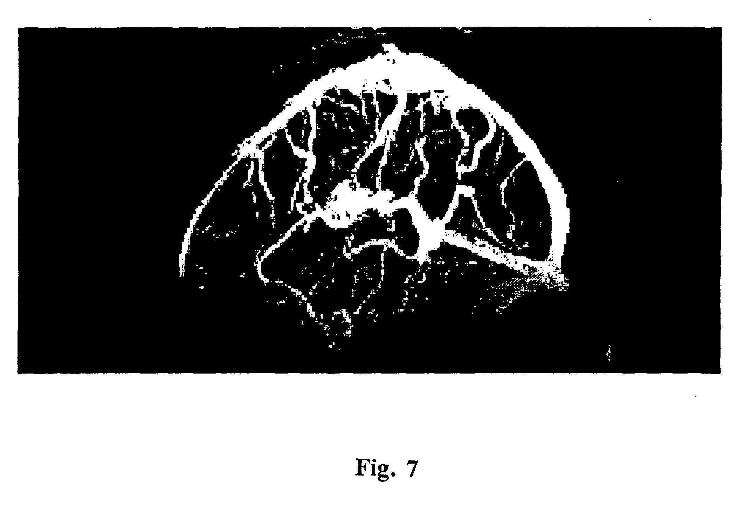

Wie in Figur 4 gezeigt, kann die erfindungsgemäß ausgeführte "parametrisierte Subtraktion" diese Artefakte bereits deutlich verringern. Bei der "parametrisierten Subtraktion" wird - angewendet auf die Subtraktionsangiographie - davon ausgegangen, daß die interessierenden Gefäße in einem ohne Kontrastmittel aufgenommenen Schnittbild nur Absorptionswerte innerhalb eines bestimmten ersten Wertebereichs besitzen können. Es wird also zum Beispiel angenommen, daß alle helleren Gebiete in dem Schnittbild von Knochen stammen. In analoger Weise wird angenommen, daß die interessierenden Gefäße nach Verabreichung des Kontrastmittels in einem Schnittbild nur Werte innerhalb eines bestimmten zweiten Wertebereichs annehmen können, der bei diesem Beispiel natürlich oberhalb des ersten Wertebereichs liegen muß, da das Kontrastmittel gerade dazu führt, daß die Gefäße heller erscheinen. Bei der parametrisierten Subtraktion werden nun überhaupt nur diejenigen Voxel berücksichtigt, denen Werte zugeordnet sind, die innerhalb des für den jeweiligen Volumendatensatz zugeordneten Wertebereichs liegen. Wie Figur 4 zeigt, sind die Artefakte bereits signifikant reduziert, jedoch noch nicht zufriedenstellend unterdrückt. Eine maximale Intensitätsprojektion eines aus einer Anzahl von Schnittbildern gemäß Figur 4 bestehenden Subtraktionsbilddatensatzes (Figur 5) zeigt noch Störungen. Werden nun der Ausdünnungsschritt und der Kontinuitätscheck durchgeführt, so erhält man diagnostisch wertvolle Schnittbilder, wie in Figur 6 gezeigt, wobei ein ganzer Satz solcher Schnittbilder dann zum Beispiel mit der genannten maximalen Intensitätsprojektion als dreidimensionales Bild dargestellt werden kann (Figur 7). Dabei beruht der sogenannte Ausdünnungsschritt auf der Annahme, daß speziell bei der Computertomographie Knochen in ihren Randbereichen aufgrund von Partialvolumeneffekten Absorptionswerte besitzen können, die deutlich geringer sind, als im Zentrum des Knochens, so daß die Randbereiche der Knochen zu Voxeln führen, denen Grauwerte zugeordnet sind, die innerhalb des ersten oder zweiten Wertebereichs liegen und die deshalb bei der parametrisieren Subtraktion nicht erfaßt werden können, da ihre Helligkeit der Helligkeit der interessierenden Gefäße entspricht. Ein Nichtberücksichtigen dieser Voxeln bei der parametrisierten Subtraktion könnte also nur dadurch erreicht werden, daß die Wertebereiche entsprechend verkleinert würden, was dann aber zur Konsequenz hätte, daß auch die eigentlich interessierenden Gefäße herausfielen. Beim sogenannten Ausdünnungsschritt wird nun überprüft, ob in der Nachbarschaft solcher Voxel, die bei der parametrisierten Subtraktion berücksichtigt wurden, eventuell Voxel liegen, die bei der Subtraktion aufgrund zu hoher Grauwerte als Knochen identifiziert und bei der Subtraktion nicht berücksichtigt wurden. Ist dies der Fall, so wird davon ausgegangen, daß auch die zu diesen nicht berücksichtigten Voxeln benachbart liegenden, jedoch nicht ganz so hell erscheinenden Voxel Teile des nicht interessierenden Knochens, nämlich dessen stets nicht so stark absorbierende Randbereiche repräsentieren. Die auf diese Weise als zum Knochen gehörig identifizierten Voxel werden dann entsprechend behandelt und zum Beispiel, wie in den Figuren 6 und 7 gezeigt, auf "Null" gesetzt, so daß sie in den Bildern nicht mehr in Erscheinung treten und die reinen, eigentlich interessierenden Gefäßstrukturen deutlich sichtbar werden. Es sei an dieser Stelle betont, daß dieser Ausdünnungsschritt natürlich theoretisch auch vor der Subtraktion ausgeführt werden könnte, so daß bereits in den ursprünglichen Volumendatensätzen diejenigen Voxel identifiziert werden könnten, die Knochenrandbereiche repräsentieren. Da jedoch in den ursprünglichen Datensätzen entsprechend viele "Knochenvoxel" enthalten sind, wäre eine solche Vorgehensweise sehr aufwendig. Besser ist es daher, zunächst durch die einfachere Subtraktionsoperation bereits einen Großteil der Knochenvoxel zu entfernen, so daß im Ausdünnungsschritt nur noch relativ wenige mögliche Knochenrandbereichsvoxel identifiziert und ausgedünnt werden müssen, was vorteilhaft eine besonders schnelle Ausführung des Verfahrens sicherstellt.

## Patentansprüche

1. Verfahren zur Rausch- und Artefaktreduktion bei digitalen Subtraktionsbildverfahren, insbesondere bei digitalen Subtraktionsangiographieverfahren,
bei welchen ein Subtraktionsbilddatensatz aus zwei Volumendatensätzen erzeugt wird,
- wobei jeder Volumendatensatz aus einer Vielzahl von Elementen (Voxeln) besteht und jedem Voxel ein m-dimensionaler Vektor (m ∈ **N**_{**+**},)insbesondere für Grau- und/oder Farbwerte zugeordnet ist,
***dadurch gekennzeichnet, dass***
- ein erster m-dimensionaler Grenzvektor definiert wird, wobei jede Komponente des Grenzvektors jeweils einen Grenzwert repräsentiert,
- eine erste Nachbarschaftsbeziehung zwischen den Voxeln des Subtraktionsbilddatensatzes definiert wird,
- wenigstens die n-te (n ∈ N₊,) Komponente der jeweils m Komponenten aller Vektoren des Subtraktionsbilddatensatzes mit der n-ten Komponente des ersten Grenzvektors verglichen und bei Erfüllung einer vorbestimmten ersten Auswahlbedingung auf einen. vorbestimmten ersten Einheitswert gesetzt wird,
- jede nicht die erste Auswahlbedingung erfüllende n-te Komponente eines einem Voxel zugeordneten Vektors mit den n-ten Komponenten der dem Voxel gemäß der ersten Nachbarschaftsbeziehung benachbart liegenden Voxeln zugeordneten Vektoren verglichen und bei Erfüllung einer vorbestimmten zweiten Auswahlbedingung ebenfalls auf den vorbestimmten ersten Einheitswert gesetzt wird.

2. Verfahren nach Anspruch 1, ***dadurch gekennzeichnet*, *daß,*** wenigstens ein zweiter m-dimensionaler Grenzvektor definiert wird und daß vor der Erzeugung des Subtraktionsbilddatensatzes wenigstens eine Komponente der Vektoren wenigstens eines der beiden Volumendatensätze mit der entsprechenden Komponente des Grenzvektors verglichen und bei Erfüllung einer dritten Auswahlbedingung auf einen vorbestimmten, nicht notwendigerweise mit dem ersten Einheitswert identischen zweiten Einheitswert gesetzt wird.

3. Verfahren nach Anspruch 1 oder 2, ***dadurch gekennzeichnet, daß*** bei der Erzeugung des Subtraktionsbilddatensatzes nur diejenigen Voxel der Volumendatensätze berücksichtigt werden, deren zugeordnete Vektoren Komponenten besitzen, die in vordefinierte erste, nicht notwendigerweise für beide Volumendatensätze identische m-dimensionale Wertebereiche fallen.

4. Verfahren nach Anspruch 3, ***dadurch gekennzeichnet, daß*** die Wertebereiche für jeden Volumendatensatz verschieden sind.

5. Verfahren nach Anspruch 3 oder 4, ***dadurch gekennzeichnet, daß*** eine nicht notwendigerweise mit der ersten Nachbarschaftsbeziehung identische zweite Nachbarschaftsbeziehung definiert wird, daß vor dem Vergleich der Vektoren des Subtraktionsbilddatensatzes mit dem ersten Grenzvektor die Voxel des Subtraktionsbilddatensatzes, denen Vektoren mit Komponenten innerhalb eines vorbestimmten zweiten m-dimensionalen Wertebereichs zugeordnet sind, ausgewählt werden und daß wenigstens eine Komponente des Vektors jedes ausgewählten Voxels dann auf einen vorbestimmten dritten Einheitswert gesetzt wird, wenn den bei der Erzeugung dieser ausgewählten Voxeln berücksichtigten Voxeln eines der beiden Volumendatensätze gemäß der zweiten Nachbarschaftsbeziehung Voxel benachbart liegen, die bei der Erzeugung des Subtraktionsbilddatensatzes aufgrund entweder des Über- oder des Unterschreitens des zugeordneten Wertebereichs nicht berücksichtigt wurden.

6. Verfahren nach Anspruch 5, ***dadurch gekennzeichnet, daß*** die Auswahl der Voxel des Subtraktionsbilddatensatzes, denen Vektoren mit Komponenten innerhalb eines vorbestimmten zweiten m-dimensionalen Wertebereichs zugeordnet sind, und das Setzen der wenigstens einen Komponente des Vektors jedes ausgewählten Voxels auf einen vorbestimmten dritten Einheitswert, wenn den bei der Erzeugung dieser ausgewählten Voxeln berücksichtigten Voxeln eines der beiden Volumendatensätze gemäß der zweiten Nachbarschaftsbeziehung Voxel benachbart liegen, die bei der Erzeugung des Subtraktionsbilddatensatzes aufgrund entweder des Über- oder des Unterschreitens des zugeordneten Wertebereichs nicht berücksichtigt wurden, nach der Erzeugung des Subtraktionsbilddatensatzes erfolgt.

7. Verfahren nach einem der vorangehenden Ansprüche, wobei die Position jedes Voxels durch drei Indizes i, j, k ∈ N₊ eindeutig beschrieben werden kann, ***dadurch gekennzeichnet, daß*** die erste und/oder die zweite Nachbarschaftsbeziehung eine vorbestimmte Anzahl von Inkrementationen und/oder Dekrementationen eines oder mehrerer Indizes enthält.

8. Verfahren nach einem der vorangehenden Ansprüche, ***dadurch gekennzeichnet, daß*** jedem Voxel ein eindimensionaler Vektor zugeordnet ist, dessen Komponente nur ganzzahlige Werte aus einem vorgegebenen Bereich möglicher Werte annehmen kann.

9. Verfahren nach Anspruch 8, ***dadurch gekennzeichnet, daß*** das wenigstens einer, vorzugsweise alle Einheitswerte entweder dem niedrigsten oder dem höchsten Wert des Bereichs möglicher Werte entsprechen.

10. Verfahren nach einem der vorangehenden Ansprüche, ***dadurch gekennzeichnet, daß*** die erste und/oder dritte Auswahlbedingung eine Abfrage enthält, ob der Wert der jeweils mit der entsprechenden Komponente des ersten oder zweiten Grenzvektors verglichenen Komponente des jeweiligen Vektors über- oder unterhalb des Wertes der entsprechenden Komponente des jeweiligen Grenzvektors liegt.

11. Verfahren nach einem der vorangehenden Ansprüche, ***dadurch gekennzeichnet, daß*** die zweite Auswahlbedingung eine Ähnlichkeitsabfrage enthält, ob einem oder mehreren der gemäß der ersten Nachbarschaftsbeziehung dem jeweils betrachteten Voxel benachbart liegenden Voxeln Vektoren zugeordnet sind, deren Komponenten der jeweils betrachteten Komponente des dem betrachteten Voxel zugeordneten Vektors ähnlich sind.

12. Verfahren nach einem der vorangehenden Ansprüche, wobei jedes Voxel der beiden Volumendatensätze und des Subtraktionsbilddatensatzes jeweils einem Pixel eines aus einer Vielzahl von Pixeln bestehenden Schnittbildes einer die Volumendatensätze und den Subtraktionsbilddatensatz bildenden Anzahl von Schnittbildern entspricht, ***dadurch gekennzeichnet,* daß** die erste Nachbarschaftsbeziehung derart definiert ist, daß zu jedem Pixel einer Schicht nur Pixel aus anderen, angrenzenden Schichten, nicht aber Pixel aus derselben Schicht als benachbart angesehen werden.

## Claims

1. A method for noise and artefacts reduction in digital subtraction image methods, particularly in digital subtraction angiography methods,
in which a subtraction image dataset is created from two volumetric datasets,
wherein each volumetric dataset is made up of a multiplicity of elements (voxels) and an m-dimensional vector (m ∈ N₊), particularly for grey and/or colour values, is assigned to each voxel,
***characterised in that***
- a first m-dimensional threshold vector is defined, wherein each component of the threshold vector itself represents one threshold value,
- a first adjacency relationship between the voxels of the subtraction image dataset is defined,
- at least the n-th (n ∈ N₊) component of the respective m components of all vectors in the subtraction image dataset are compared with the n-th component of the first threshold vector, and is set to a predefined first unit value if a predefined first selection condition is fulfilled,
- each n-th component of a vector assigned to a voxel not fulfilling the first selection condition is compared with the n-th components of the vectors assigned to the voxels adjacent to the voxel according to the first adjacency relationship and is also set to the predefined first unit value if a predefined second selection condition is fulfilled.

2. The method according to claim 1, ***characterised in that*** at least a second m-dimensional threshold vector is defined and that at least one component of the vectors of at least one of the two volumetric datasets is compared to the corresponding component of the threshold vector prior to the creation of a subtraction image dataset, and if a third selection condition is met, is set to a predefined second unit value, not necessarily identical to the first unit value.

3. The method according to claims 1 or 2, ***characterised in that*** for purposes of creating the subtraction image dataset, only those voxels of the volumetric datasets are considered whose assigned vectors possess components falling within predefined first m-dimensional value ranges, which are not necessarily identical for both volumetric datasets.

4. The method according to claim 3, ***characterised in that*** the value ranges are different for each volumetric dataset.

5. The method according to claims 3 or 4, ***characterised in that*** a second adjacency relationship, not necessarily identical to the first adjacency relationship, is defined, that the voxels of the subtraction image dataset to which vectors having components within a predefined second m-dimensional value range are assigned are selected before the vectors of the subtraction image dataset are compared with the first threshold vector, and that at least one component of the vector of each selected voxel is then set to a predefined third unit value, if voxels that were not considered in the creation of the subtraction image dataset because they fell below or above the assigned value range are adjacent to the voxels considered in the creation of these selected voxels of one of the two volumetric datasets.

6. The method according to claim 5, ***characterised in that*** the selection of the subtraction image dataset voxels to which vectors having components within a predefined second m-dimensional value range are assigned, and the setting to a predefined third unit value of the at least one component of the vector of each selected voxel, if voxels that were not considered in the creation of the subtraction image dataset because they fell below or above the assigned value range are adjacent to the voxels considered in the creation of these selected voxels of one of the two volumetric datasets, are performed after the creation of the subtraction image dataset.

7. The method according to any of the preceding claims, wherein the position of each voxel may be described uniquely with three indices i, j, k ∈ N₊, ***characterised in that*** the first and/or second adjacency relationship contains a predefined number of incrementations or decrementations of one or more indices.

8. The method according to any of the preceding claims, ***characterised in that*** a unidimensional vector, the component of which may assume only integer values from a predefined range of possible values, is assigned to each voxel.

9. The method according to claim 8, ***characterised in that*** at least one, and preferably all unit values correspond either to the lowest or to the highest value in the range of possible values.

10. The method according to any of the preceding claims, ***characterised in that*** the first and/or third selection condition contains a query as to whether the value of the component of the respective vector compared respectively with the corresponding component of the first or second threshold vector falls above or below the value of the corresponding component of the threshold vector.

11. The method according to any of the preceding claims, ***characterised in that*** the second selection condition contains a similarity query as to whether vectors are assigned to one or more of the voxels adjacent according to the first adjacency relationship to the voxel under consideration in each case, the components of which vectors are similar to the component under respective consideration of the vector assigned to the voxel under consideration.

12. The method according to any of the preceding claims, wherein each voxel of the two volumetric datasets and the subtraction image dataset respectively corresponds to one pixel of a cross-sectional image consisting of a multiplicity of pixels of a number of cross-sectional images forming the volumetric datasets and the subtraction image dataset, ***characterised in that*** the first adjacency relationship is defined such that only pixels from other, adjacent layers, but not pixels from the same layer may be considered to be adjacent to each pixel in a layer.

## Revendications

1. Procédé de réduction du bruit et des artefacts dans des procédés d'imagerie numérique avec soustraction, en particulier dans des procédés d'angiographie numérique à soustraction,
dans lesquels un article d'imagerie à soustraction est élaboré à partir de deux articles de volume,
- chaque article de volume consistant en une multitude d'éléments (voxels) et un vecteur dimensionnel m (m ∈ N₊,) étant associé à chaque voxel, en particulier pour les valeurs en gris et/ou en couleur,
***caractérisé en ce que***
- un premier vecteur dimensionnel m limite est défini, chaque composante du vecteur limite représentant respectivement une valeur limite,
- un premier rapport de voisinage entre les voxels de l'article d'imagerie à soustraction est défini,
- au moins la nième composante (n ∈ N₊,) des composantes m respectives de tous les vecteurs de l'article d'imagerie à soustraction est comparée avec la nième composante du premier vecteur limite et est fixée, lorsqu'une première condition de sélection prédéfinie est remplie, à une première valeur unitaire prédéfinie,
- chaque nième composante d'un vecteur associé à un voxel ne remplissant pas la première condition de sélection est comparée avec les nièmes composantes des vecteurs associés au voxel se trouvant à proximité selon le premier rapport de voisinage et est également fixée à la première valeur unitaire prédéfinie lorsqu'une deuxième condition de sélection prédéfinie est remplie.

2. Procédé selon la revendication 1, ***caractérisé en ce qu***'au moins un deuxième vecteur limite dimensionnel m est défini et qu'avant l'élaboration de l'article d'imagerie à soustraction, au moins une composante des vecteurs d'au moins un des deux articles de volume est comparée avec la composante correspondante du vecteur limite et, lorsqu'une troisième condition de sélection est remplie, fixée à une deuxième valeur unitaire prédéfinie, non obligatoirement identique à la première valeur unitaire.

3. Procédé selon la revendication 1 ou 2, ***caractérisé en ce que,*** lors de l'élaboration de l'article d'imagerie à soustraction, seuls sont considérés les voxels de l'article de volume dont les vecteurs associés possèdent des composantes qui relèvent des premières fourchettes de valeur dimensionnelles m prédéfinies, non obligatoirement identiques pour les deux articles de volume.

4. Procédé selon la revendication 3, ***caractérisé en ce que*** les fourchettes de valeurs sont différentes pour chaque article de volume.

5. Procédé selon la revendication 3 ou 4, ***caractérisé en ce* qu'**un deuxième rapport de voisinage non obligatoirement identique au premier rapport de voisinage est défini, qu'avant la comparaison des vecteurs de l'article d'imagerie à soustraction avec le premier vecteur limite, les voxels de l'article d'imagerie à soustraction, auxquels sont associés des vecteurs avec des composantes se situant dans le cadre d'une deuxième fourchette prédéfinie de valeurs dimensionnelles m, sont sélectionnés et qu'au moins une composante du vecteur de chaque voxel sélectionné est ensuite fixée à une troisième valeur unitaire prédéfinie si, à proximité des voxels considérés lors de l'élaboration de ces voxels sélectionnés d'un des deux articles de volume, se situent, selon le deuxième rapport de voisinage, des voxels qui n'ont pas été considérés lors de l'élaboration de l'article d'imagerie à soustraction en raison soit du dépassement, soit de la non-atteinte de la fourchette de valeurs associée.

6. Procédé selon la revendication 5, ***caractérisé en ce que*** la sélection des voxels de l'article d'imagerie à soustraction, auxquels sont associés des vecteurs avec des composantes se situant dans le cadre d'une deuxième fourchette prédéfinie de valeurs dimensionnelles m, et la fixation de la composante présente au moins en un exemplaire du vecteur de chaque voxel sélectionné à une troisième valeur unitaire prédéfinie a lieu après l'élaboration de l'article d'imagerie à soustraction si, à proximité des voxels considérés lors de l'élaboration de ces voxels sélectionnés d'un des deux articles de volume, selon le deuxième rapport de voisinage, se trouvent des voxels qui n'ont pas été considérés lors de l'élaboration de l'article d'imagerie à soustraction en raison soit du dépassement, soit de la non-atteinte de la fourchette de valeurs associée.

7. Procédé selon une des revendications précédentes, la position de chaque voxel pouvant être décrite sans équivoque par trois indices i, j, k ∈ N₊, ***caractérisé en ce que*** le premier et/ou le deuxième rapport de voisinage comporte un nombre prédéfini d'incrémentations et/ou décrémentations d'un ou de plusieurs indices.

8. Procédé selon une des revendications précédentes, ***caractérisé en ce qu*'**à chaque voxel est associé un vecteur unidimensionnel, dont la composante ne peut prendre que des valeurs numériques entières dans une fourchette prédéfinie de valeurs potentielles.

9. Procédé selon la revendication 8, ***caractérisé en ce que*** la valeur unitaire au moins existante, mais de préférence toutes les valeurs unitaires, correspondent soit à la valeur la plus basse, soit à la valeur la plus élevée de la fourchette de valeurs potentielles.

10. Procédé selon une des revendications précédentes, ***caractérisé en ce que*** la première et/ou la troisième condition de sélection comporte une interrogation, à savoir si la valeur de la composante respectivement comparée avec la composante correspondante du premier ou du deuxième vecteur limite du vecteur respectif se situe au dessus ou en dessous de la valeur de la composante correspondante du vecteur limite respectif.

11. Procédé selon une des revendications précédentes, ***caractérisé en ce que*** la deuxième condition de sélection comporte une interrogation similaire, à savoir si, à un ou plusieurs des voxels se situant à proximité du voxel respectivement considérés selon le premier rapport de voisinage, sont associés des vecteurs dont les composantes sont identiques aux composantes respectivement considérées du vecteur associé au voxel considéré.

12. Procédé selon une des revendications précédentes, chaque voxel des deux articles de volume et de l'article d'imagerie à soustraction correspondant respectivement à un pixel d'une image en coupe consistant en une multitude de pixels d'une série d'images en coupe formant les articles de volume et l'article d'imagerie à soustraction, ***caractérisé en ce que*** le premier rapport de voisinage est défini de manière à ce que soient considérés comme voisins de chaque pixel d'une couche seulement les pixels d'autres couches contiguës, et non pas les pixels de la même couche.
